# EUROPEAN PATENT SPECIFICATION

(11) **EP 3 291 948 B1**
(45) Date of publication and mention of the grant of the patent: **20.04.2022**
(21) Application number: 16722064.9
(22) Date of filing: 21.04.2016
(51) Int. Cl.: F16K 3/08

(54) **PNEUMATIC POWER TOOL WITH AN ADJUSTABLE AIR FLOW LIMITING VALVE**
PNEUMATISCH ANGETRIEBENES WERKZEUG MIT EINSTELLBAREM LUFTSTROMBEGRENZUNGSVENTIL
OUTIL PORTATIF À MOTEUR PNEUMATIQUE DOTÉ D'UNE SOUPAPE DE LIMITATION DE DÉBIT D'AIR RÉGLABLE

(30) Priority: 05.05.2015 SE 1550572
(43) Date of publication of application: 14.03.2018
(73) Proprietor: Atlas Copco Industrial Technique AB, 105 23 Stockholm (SE)
(72) Inventor: YOUSEF, Hassan, 162 46 Vällingby (SE); GEORGSSON, Wilhelm, Mattias, 143 62 Trångsund (SE)
(86) International application number: PCT/EP2016/058846
(87) International publication number: WO 2016/177581

(56) References cited:
- WO-A1-2010/110714
- DE-A1- 3 007 601
- US-A- 4 596 377
- US-A- 4 778 015
- US-B1- 6 644 419

## Description

### Technical Field

The invention relates to a valve module and to pneumatic power tool comprising a housing with a pressure air inlet passage, a motor connected to a pressure air source via the air inlet passage, and an adjustable air flow limiting valve located in the pressure air inlet passage comprising the valve module.

### Background

In a previously known power tool of the above type an adjustable air inlet flow limiting valve has been integrated with the throttle valve of the tool. One problem inherent in that type of integrated valves is that it has been difficult to obtain a throttle valve with a smooth starting function in combination with an adjustable air flow limiting function without increasing the physical dimensions of the entire valve mechanism. This is particularly a problem in tools wherein the valve mechanism is located in a pistol grip of the tool housing, because it will cause a too wide grip portion for the operator and, hence a less safe and uncomfortable handling of the tool.

In another type of prior art pneumatic power tools there have been incorporated an inlet air flow limiting valve device which has required an undesirably large space in the tool housing. This means that an internal volume in the housing that might have been used for motor noise damping has been occupied by the inlet flow limiting valve device. This has called for alternative external noise damping means which has caused an undesirable increase in the outer dimensions of the tool.

US 6 644 419 B1 discloses a valve module according to the preamble of claim 1.

Other solutions related to pneumatic power tools are described in US4778015, WO2010/110714 and DE3007601.

### Summary

It is an object of the invention to provide a pneumatic power tool comprising a housing with an air inlet passage, and an adjustable air flow limiting valve formed as a module and incorporated in the air inlet passage.

Another object of the invention is to provide a pneumatic power tool comprising a housing with an air inlet passage, and an adjustable air flow limiting valve formed as a module and adapted to be mounted at the upstream end of the air inlet passage and to form an intermediate part between the housing and a connection member for a pressure air supply conduit.

Still another object of the invention is to provide an adjustable air flow limiting valve formed as a module and incorporated into the air inlet passage of a pneumatic power tool, wherein the air flow limiting valve module is adapted to replace a conventional connection member for a pressure air supply conduit at any existing standard type power tool. Further objects and advantages of the invention will appear from the following specification and claims.

At least one and/or other objects is obtained by the invention as set out in the appended claims.

The invention also extends to a valve module in accordance with the above and adapted to be mounted in a power tool.

### Brief Description of the Drawings

The invention will now be described in more detail and with reference to the accompanying drawings in which:
Fig. 1 shows, partly in section, a side view of a power tool according to the invention.
Fig. 2 shows a side view of an air flow limiting valve module according to the invention.

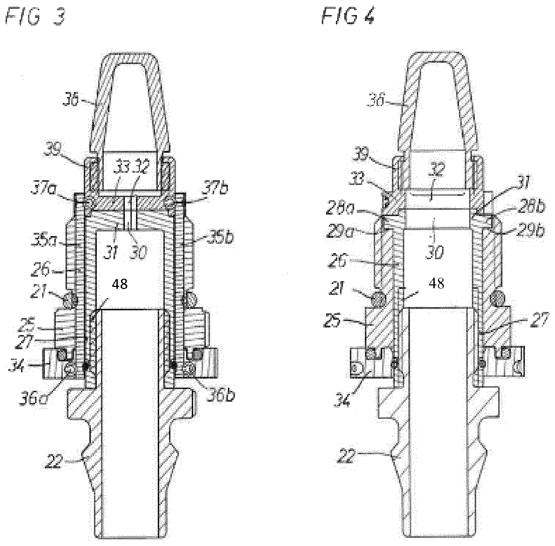

Fig. 3 shows a longitudinal section through the flow limiting valve module in Fig. 2.
Fig. 4 shows another longitudinal section through the flow limiting valve module in Fig. 2.

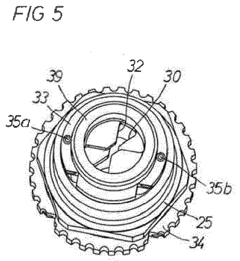

Fig. 5 shows a perspective view of the flow limiting valve module, illustrating the adjustable flow openings of the valve module.

### Detailed Description

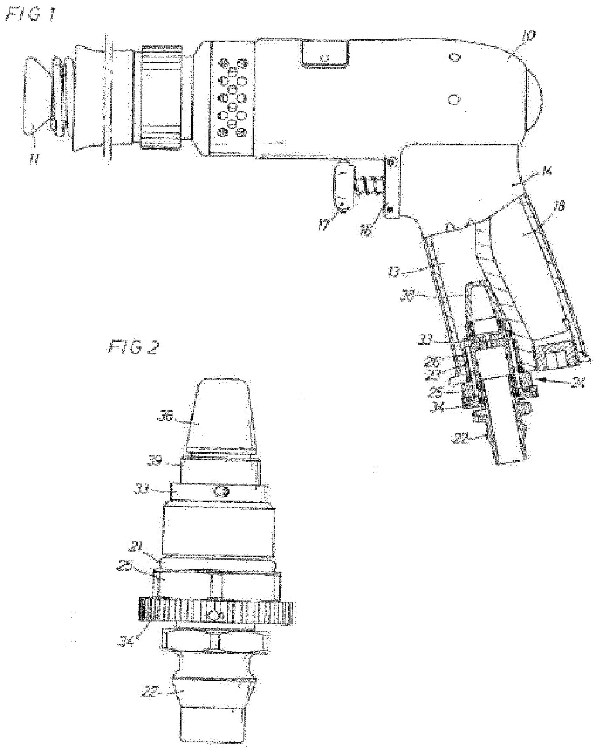

The power tool illustrated in Fig. 1 is a pneumatic chisel hammer comprising a pistol type tool housing 10 in which is supported a pneumatic impact motor. At the front end of the housing 10 there is connected a working implement in the form of a chisel 11. Since the very type of pneumatic motor is of no significance in this context and does not form any part of the invention a detailed description of thereof is left out of this specification.

The tool housing 10 is formed with a pistol grip 14 and a pressure air inlet passage 13 extending through the pistol grip 14 and by which the motor is connected to a pressure air source via a non-illustrated air supply conduit. In the pistol grip 14 there is located a throttle valve 16. The throttle valve 16 is operated by a trigger 17 and preferably includes a smooth start function for improved tool performance control. The pistol grip 14 also comprises chamber 18 enclosing an air volume for noise damping purposes. The throttle valve 16 is not described in detail since it is of a design well known in the art.

For obtaining a motor speed limitation at full throttle there is provided an adjustable air flow limiting inlet valve included in a separate air flow limiting valve module 24. The latter is located in the upstream end of the air inlet passage 13 which is at the lower end of the pistol grip 14. Thereby, the air flow limiting valve is separated from the throttle valve 16 and does not cause any complication to the throttle valve design nor has it any undesired influence on the dimensions of the pistol grip 14.

The air flow limiting valve module 24 comprises a threaded mounting sleeve 25 for attachment to the lower end of the pistol grip 14 by engaging a thread 23 in the inlet passage 13. An O-ring 21 is carried on the mounting sleeve 25 for sealing engagement with the housing 10. The threaded part of the inlet passage 13 is normally intended to receive an adapter sleeve for attachment of a conduit connection member, like a quick coupling element. According to the invention the valve module 24 is intended to be combined with a standard type conduit connection element to thereby form a complete unit or cartridge intended for a direct replacement for a conventional adaptor sleeve and a separate conduit connection element. Thereby, the valve module 24 forms an intermediate part between an air supply conduit and the inlet passage 13. This arrangement is illustrated in Fig.1.

In the mounting sleeve 25 there is supported a hollow valve cylinder 26 which has an open lower end with an inner thread 48 and extends axially outside the mounting sleeve 25. This part of the valve cylinder 26 constitutes a mounting socket 27 for attachment of a conduit connection element 22. At its upper end the valve cylinder 26 is provided with two radially extending heels 28a, b arranged to engage grooves 29a, b in the mounting sleeve 25 to thereby lock the valve cylinder 26 relative to the latter, both against rotation and longitudinal displacement. At its upper end the valve cylinder 26 is closed by a transverse end wall 31 having a butterfly shaped opening 30 which is arranged to cooperate with an identical butterfly shaped opening 32 of a rotatable valve disc 33 supported on the valve cylinder end wall 31. The valve cylinder end wall 31 and valve disc 33 form together the adjustable air inlet flow limiting valve. The valve disc 33 is also provided with a rear socket portion 39 for supporting a sintered type air filter element 38.

The butterfly shape of the openings 32 and 30 in the valve disc 33 and valve cylinder end wall 31, respectively, is advantageous in that a variation of the flow area from closed to fully open condition is accomplished by just 90 degrees rotation of the valve disc 33. This specific shape of the valve openings 30 and 32 also gives an optimum fully open flow area in relation to the available valve dimensions.

Other identical shapes are also contemplated. As an example could the opening be shaped as a star (double butterfly). The flow area from closed to fully open condition is then accomplished by just 45 degrees rotation of the valve disc 33.

On the lower end portion of the valve cylinder 26 and axially outside the mounting sleeve 25 there is supported a rotatable maneuver ring 34 by which adjustments of the air flow through the valve module 24 may be accomplished. To this end the maneuver ring 34 is connected to the valve disc 33 via two elongated rods 35a,b which are secured to the maneuver ring 34 by transverse spring pins 36a,b, and to the valve disc 33 by two spring pins 37a,b. The rods 35a, b extend along the outside of valve cylinder 26 and are arranged to transfer rotational movement from the maneuver ring 34 to the valve disc 33. At the same time the rods 35a, b act as a retaining means for axially locking the maneuver ring 34 to the valve disc 33 and also to keep up a contact between with maneuver ring 34 and the mounting sleeve 25 on one hand and between the valve disc 33 and the valve cylinder end wall 31 on the other hand.

As illustrated in Fig. 1 the air inlet flow limiting valve module 24 is attached to the upstream end of the air inlet passage 13, and extends in the direction of the air flow through the inlet passage 13. This means that the entire flow limiting valve module 24 is incorporated in the air inlet passage 13 and provides for an air flow direction that is identical with flow direction in the inlet passage 13. Accordingly, this new arrangement of a an air inlet flow limiting valve forms a compact and easily replaceable module 24 which does not require any further space inside the tool housing 10.

For adjusting the air flow through the inlet passage 13 and thereby accomplishing a desired limitation of the motor speed at full throttle opening the maneuver ring 34 is rotated in either direction, thereby increasing or reducing the air inlet flow. A rotating movement of the maneuver ring 34 is transferred to the valve disc 33 via the parallel rods 35a, b. In this way the valve disc 33 may be rotated between a closed position and a fully opened position in which the butterfly shaped opening 32 of the valve disc 33 fully coincides with the corresponding butterfly shaped opening 30 of the valve cylinder end wall 31.

By providing the air flow limiting valve module 24 as a separate unit it could be applied on different types of power tools and is not dependent on the design and location of a throttle valve. When combining the valve module with a quick coupling element as illustrated in the drawing figures there is obtained a further advantage, namely that it can be fitted to a new power tool as a complete unit or cartridge without the necessity to add a connection element in a separate assembly procedure. It will also facilitate replacement of a conventional conduit connection element fitted to a power tool already taken into production with a complete unit or cartridge including not only a conduit connection element but an adjustable inlet air flow limiting valve module.

The embodiments of the invention are not limited to the above described example but may be freely varied within the scope of the claims.

## Claims

1. Valve module (24) comprising a threaded mounting sleeve (25), attachable to a housing (10) of a power tool further comprising an inlet air flow limiting valve arranged to be located inside an air inlet passage (13) of a power tool, the inlet air flow limiting valve is adjustable to provide a varying flow area between a closed position and an open position, said valve module (24) further comprises a rotatable valve (33) and a non-rotatable valve cylinder (26), both provided with interacting flow openings (32, 30), and a rotatable maneuver ring (34) connected to said valve (33) for rotating said valve (33) and shift said flow limiting valve (30-33) between the open and the closed positions such that the inlet air flow limiting valve is adjustable to provide for a varying flow area between said closed position to fully open position with an optimum fully open flow area in relation to the available valve dimensions, and **characterised in that** the rotatable valve is a rotatable valve disc (33), the non-rotatable valve cylinder (26) has a closed transverse end wall (31), the rotatable valve disc (33) and the non-rotatable valve cylinder (26) with the closed transverse end wall (31) are both provided with identical interacting butterfly shaped openings.

2. Valve module (24) according to claim 1, wherein said valve module (24) comprises a threaded mounting socket (27) for attachment of a connection element (22) for a pressure air supply conduit.

3. Valve module (24) according to claim 1 or 2, wherein said valve cylinder (26) extends in parallel with the inlet passage (13) where the inner transverse end wall (31) is arranged to support said rotatable valve disc (33).

4. Valve module (24) according to claim 3, wherein said interacting flow openings (32, 30) are star shaped.

5. Valve module (24) according to claim 3 or 4, wherein said valve disc (33) extends radially outside said valve cylinder end wall (31), and one or more coupling rods (35a,b) extend in parallel along the outside of said valve cylinder (26) and are secured both to said maneuver ring (34) and to said valve disc (33) .

6. Valve module (24) according to any of claims 1-5, wherein said valve module (24) and said connection element (22) for a pressure air supply conduit together form a replaceable unit.

7. Pneumatic power tool comprising a housing (10) with a pressure air inlet passage (13), a motor connected to the air inlet passage (13), and an adjustable inlet air flow limiting valve (30-33) located inside the air inlet passage (13) and shiftable between an open position and a closed position, wherein the inlet air flow limiting valve (30-33) forms a part of a separate valve module (24) according to any one of claims 1 - 6 attached to the housing (10).

## Patentansprüche

1. Ventilmodul (24), das eine gewindete Montagehülse (25) umfasst, die an einem Gehäuse (10) eines Elektrowerkzeugs anbringbar ist, das ferner ein Einlassluftströmungsbegrenzungsventil umfasst, das angeordnet ist, um innerhalb eines Lufteinlassdurchgangs (13) eines Elektrowerkzeugs gelegen zu sein, wobei das Einlassluftströmungsbegrenzungsventil einstellbar ist, um einen variierenden Strömungsquerschnitt zwischen einer geschlossenen Position und einer offenen Position bereitzustellen, wobei das Ventilmodul (24) ferner ein drehbares Ventil (33) und einen nicht drehbaren Ventilzylinder (26), die beide mit zusammenwirkenden Strömungsöffnungen (32, 30) versehen sind, und einen drehbaren Manövrierring (34) umfasst, der mit dem Ventil (33) zum Drehen des Ventils (33) verbunden ist, und um das Strömungsbegrenzungsventil (30-33) zwischen der offenen und der geschlossenen Position derart zu verschieben, dass das Einlassluftströmungsbegrenzungsventil einstellbar ist, um einen variierenden Strömungsquerschnitt zwischen der geschlossenen Position und der vollständig geöffneten Position mit einem optimalen vollständig geöffneten Strömungsquerschnitt in Bezug auf die verfügbaren Ventilabmessungen bereitzustellen, und **dadurch gekennzeichnet, dass** das drehbare Ventil eine drehbare Ventilscheibe (33) ist, der nicht drehbare Ventilzylinder (26) eine geschlossene Querstirnwand (31) aufweist, die drehbare Ventilscheibe (33) und der nicht drehbare Ventilzylinder (26) mit der geschlossenen Querstirnwand (31) beide mit identisch zusammenwirkenden schmetterlingsförmige Öffnungen versehen sind.

2. Ventilmodul (24) nach Anspruch 1, wobei das Ventilmodul (24) eine gewindete Montagebuchse (27) für eine Anbringung eines Verbindungselements (22) für eine Druckluftversorgungsleitung umfasst.

3. Ventilmodul (24) nach Anspruch 1 oder 2, wobei sich der Ventilzylinder (26) zu dem Einlassdurchgang (13) parallel erstreckt, wobei die innere Querstirnwand (31) angeordnet ist, um die drehbare Ventilscheibe (33) zu stützen.

4. Ventilmodul (24) nach Anspruch 3, wobei die zusammenwirkenden Strömungsöffnungen (32, 30) sternförmig sind.

5. Ventilmodul (24) nach Anspruch 3 oder 4, wobei sich die Ventilscheibe (33) außerhalb der Ventilzylinderstirnwand (31) radial erstreckt und sich eine oder mehrere Kopplungsstangen (35a, b) entlang der Außenseite des Ventilzylinders (26) parallel erstrecken und sowohl an dem Manövrierring (34) als auch an der Ventilscheibe (33) befestigt sind.

6. Ventilmodul (24) nach einem der Ansprüche 1-5, wobei das Ventilmodul (24) und das Verbindungselement (22) für eine Druckluftversorgungsleitung zusammen eine austauschbare Einheit ausbilden.

7. Pneumatisches Elektrowerkzeug, das ein Gehäuse (10) mit einem Drucklufteinlassdurchgang (13), einen Motor, der mit dem Lufteinlassdurchgang (13) verbunden ist, und ein einstellbares Einlassluftströmungsbegrenzungsventil (30-33) umfasst, das innerhalb des Lufteinlassdurchgangs (13) gelegen ist und zwischen einer offenen Position und einer geschlossenen Position verschiebbar ist, wobei das Einlassluftströmungsbegrenzungsventil (30-33) einen Teil eines separaten Ventilmoduls (24) gemäß einem der Ansprüche 1-6 ausbildet, das an dem Gehäuse angebracht ist (10).

## Revendications

1. Module de soupape (24) comprenant un manchon de montage fileté (25), pouvant être fixé à un boîtier (10) d'un outil à moteur comprenant en outre une soupape de limitation de débit d'air d'entrée agencée pour être située à l'intérieur d'un passage d'entrée d'air (13) d'un outil à moteur, la soupape de limitation de débit d'air d'entrée est réglable pour fournir une zone de débit variable entre une position fermée et une position ouverte, ledit module de soupape (24) comprend en outre une soupape rotative (33) et un cylindre de soupape non rotatif (26) tous deux pourvus d'ouvertures d'écoulement interactives (32, 30) et une bague de manœuvre rotative (34) reliée à ladite soupape (33) pour faire tourner ladite soupape (33) et déplacer ladite soupape de limitation de débit (30-33) entre les positions ouverte et fermée de telle sorte que la soupape de limitation de débit d'air d'entrée est réglable pour fournir une zone d'écoulement variable entre ladite position fermée et la position entièrement ouverte avec une zone d'écoulement entièrement ouverte optimale par rapport aux dimensions disponibles de la soupape, et **caractérisée en ce que** la soupape rotative est un disque de soupape rotatif (33), le cylindre de soupape non rotatif (26) a une paroi d'extrémité transversale fermée (31), le disque de soupape rotatif (33) et le cylindre de soupape non rotatif (26) avec la paroi d'extrémité transversale fermée (31) sont tous deux pourvus d'ouvertures interactives en forme de papillon.

2. Module de soupape (24) selon la revendication 1, dans lequel ledit module de soupape (24) comprend une douille de montage filetée (27) pour la fixation d'un élément de liaison (22) pour un conduit d'alimentation en air sous pression.

3. Module de soupape (24) selon la revendication 1 ou 2, dans lequel ledit cylindre de soupape (26) s'étend parallèlement au passage d'entrée (13) où la paroi d'extrémité transversale intérieure (31) est agencée pour supporter ledit disque de soupape rotatif (33).

4. Module de soupape (24) selon la revendication 3, dans lequel lesdites ouvertures d'écoulement interactives (32, 30) sont en forme d'étoile.

5. Module de soupape (24) selon la revendication 3 ou 4, dans lequel ledit disque de soupape (33) s'étend radialement à l'extérieur de ladite paroi d'extrémité de cylindre de soupape (31), et une ou plusieurs tiges d'accouplement (35a, b) s'étendent en parallèle le long de l'extérieur dudit cylindre de soupape (26) et sont solidaires à la fois de ladite bague de manœuvre (34) et dudit disque de soupape (33).

6. Module de soupape (24) selon l'une quelconque des revendications 1 à 5, dans lequel ledit module de soupape (24) et ledit élément de liaison (22) pour un conduit d'alimentation en air sous pression forment ensemble une unité remplaçable.

7. Outil à moteur pneumatique comprenant un boîtier (10) avec un passage d'entrée d'air sous pression (13), un moteur relié au passage d'entrée d'air (13) et une soupape de limitation de débit d'air d'entrée réglable (30-33) située à l'intérieur du passage d'entrée d'air (13) et commutable entre une position ouverte et une position fermée, dans lequel la soupape de limitation de débit d'air d'entrée (30-33) fait partie d'un module de soupape (24) séparé selon l'une quelconque des revendications 1 à 6 fixé au boîtier (10).
